# EUROPÄISCHE PATENTANMELDUNG

(11) **EP 2 284 124 A1**
(43) Veröffentlichungstag der Anmeldung: **16.02.2011**
(21) Anmeldenummer: 09011882.9
(22) Anmeldetag: 17.09.2009
(51) Int. Cl.: C01B 31/18

(54) **Verfahren und Vorrichtung zur Produktion von Kohlenmonoxid**

(30) Priorität: 14.08.2009 DE 102009037608
(71) Anmelder: Linde AG, 80331 München (DE)
(72) Erfinder: Lahne, Ulrich, 82041 Deisenhofen (DE); Ferstl, Johann, Dr., 80995 München (DE); Tautz, Hanno, 82538 Geretsried (DE); Wiberg, Sören, 17835 Ekerö (SE); Laumen, Christoph, 80634 München (DE); Zhu, Jian-Jun, Dr., Pudong, Shanghai 201206 (CN)
(74) Vertreter: Gellner, Bernd

(57) **Zusammenfassung**

Die Erfindung betrifft ein Verfahren sowie eine Vorrichtung zur Produktion von Kohlenmonoxid (2), bei dem durch Zersetzung von Ameisensäure ein saueres, Wasser und Kohlenmonoxid enthaltendes Gasgemisch (1) erzeugt wird, aus dem nachfolgend Wasser auskondensiert und dabei entstehende Säure neutralisiert wird. Das sauere,

Wasser und Kohlenmonoxid enthaltenden Gasgemisch (1) wird in direktem Kontakt mit einer alkalischen Wasserlösung (A) gebracht und dadurch soweit abgekühlt wird, dass Wasser auskondensiert.

## Beschreibung

Die Erfindung betrifft ein Verfahren zur Produktion von Kohlenmonoxid, bei dem durch Zersetzung von Ameisensäure ein saueres, Wasser und Kohlenmonoxid enthaltendes Gasgemisch erzeugt wird, aus dem nachfolgend Wasser auskondensiert und dabei entstehende Säure neutralisiert wird.

Weiterhin betrifft die Erfindung eine Vorrichtung zur Durchführung des Verfahrens.

Unter einem saueren Gasgemisch ist ein Gemisch unterschiedlicher gasförmiger Stoffe zu verstehen, von denen wenigstens einer bei seiner Lösung in Wasser eine Säure bildet.

Die überwiegende Menge des weltweit benötigten Kohlenmonoxids (CO) wird durch die Vergasung kohlenstoffhaltiger Einsatzstoffe erzeugt. Gewöhnlich werden die Einsatzstoffe hierbei durch Partielle Oxidation, Autothermal- oder Dampfreformierung in ein Kohlenmonoxid enthaltendes Synthesegas umgesetzt, das nachfolgend von Feststoffen gereinigt, getrocknet und zerlegt wird. Auf diese Weise ist es möglich, Kohlenmonoxid mit einer Reinheit von mehr als 99,5% zu gewinnen. Wegen des erforderlichen apparativen Aufwands ist diese Methode der CO-Gewinnung nur dann wirtschaftlich, wenn sie in großtechnischem Maßstab angewendet wird.

Kleinere Kohlenmonoxidmengen werden nach dem Stand der Technik wirtschaftlich und mit hoher Reinheit durch die Zersetzung von Ameisensäure gewonnen (Industrial Engineering Chemistry, April 1929, S. 389). Die Ameisensäure wird hierzu in einen Reaktor eingebracht, der Schwefel- oder Phosphorsäure als Katalysator enthält. Der Katalysator bewirkt die Zersetzung der Ameisensäure in Kohlenmonoxid und Wasser, die beide als Teil eines saueren Gasgemisches mit einer Temperatur von ca. 170°C aus dem Reaktor abgezogen und einem Kühler zugeleitet werden. Das im Kühler erzeugte zweiphasige Stoffgemisch wird anschließend einer Trenneinrichtung zugeführt, um die zum überwiegenden Teil aus Kohlenmonoxid bestehende Gasphase von der saueren Flüssigphase abzutrennen. Als Trenneinrichtung wird nach dem Stand der Technik entweder eine Trennkolonne eingesetzt, in die auch Lauge eingeleitet wird, um die Flüssigphase zu neutralisieren, oder eine mit alkalischem Wasser gefüllte Blasensäule.

Das bei der Zersetzung der Ameisensäure entstehende sauere Gasgemisch ist sehr aggressiv, weshalb der nach dem Stand der Technik für die Abkühlung benötigte Kühler aus speziellen, säurefesten Materialien gefertigt sein muss. Derartige Materialien sind teuer und weisen i. Allg. eine geringe Wärmeleitfähigkeit auf. Da auch der Wärmeübergangskoeffizient zwischen Gasphase und Kühler gering ist, ist es erforderlich, den Kühler mit einer großen Wärmeübertragungsfläche auszuführen, um ausreichend hohe Abkühlraten zu erzielen. Aus den aufgeführten Gründen ist ein derartiger Kühler groß und teuer und beeinträchtigt die Wirtschaftlichkeit der Kohlenmonoxiderzeugung in erheblichem Maße.

Aufgabe der vorliegenden Erfindung ist es daher, ein Verfahren sowie eine Vorrichtung der gattungsgemäßen Art anzugeben, die es ermöglichen, die Nachteile des Standes der Technik zu überwinden.

Die gestellte Aufgabe wird verfahrensseitig erfindungsgemäß dadurch gelöst, dass das sauere, Wasser und Kohlenmonoxid enthaltenden Gasgemisch in direkten Kontakt mit einer alkalischen Wasserlösung gebracht und dadurch soweit abgekühlt wird, dass Wasser auskondensiert.

Die alkalische Wasserlösung, die sinnvollerweise in einer Kolonne angeordnet ist, in die das sauere, Wasser und Kohlenmonoxid enthaltende Gasgemisch eingeleitet wird und aus der Kohlenmonoxid als Produkt abgezogen wird, erfüllt bei der Durchführung des erfindungsgemäßen Verfahrens mehrere Aufgaben. Zum einen wirkt sie als Kühlmittel, das dem saueren, Wasser und Kohlenmonoxid enthaltenden Gasgemisch Wärme entzieht und für das Auskondensieren von Wasser sorgt. Zum anderen dient sie zur Neutralisierung von bei der Wasserkondensation entstehenden Säure sowie zur Abtrennung von Kohlenmonoxid aus dem ursprünglichen Gasgemisch. Der Wärmeübergang zwischen dem abzukühlenden Gasgemisch bzw. der bei der Abkühlung entstehenden Flüssigphase und dem Kühlmittel ist wesentlich intensiver, als beim Stand der Technik, da Kühlmittel und Gasgemisch nicht durch eine feste, den Wärmestrom behindernden Wand voneinander getrennt sind. Darüber hinaus ist es möglich, das abzukühlende Gasgemisch und die alkalische Wasserlösung derart in Kontakt zu bringen, dass auf kleinem Raum eine große Grenzfläche entsteht, über die sowohl Stoffe als auch Wärme zwischen Gas und Flüssigkeit effektiv ausgetauscht werden können. Zweckmäßigerweise wird hierzu das Gasgemisch in Form kleiner Blasen in die alkalische Wasserlösung eingeleitet oder/und es wird die alkalische Wasserlösung in das Gasgemisch eingesprüht und dabei in feine Tröpfchen zerstäubt.

Bevorzugte Ausgestaltungen des erfindungsgemäßen Verfahrens sehen vor, dass das sauere, Wasser und Kohlenmonoxid enthaltenden Gasgemisch über einen Gasverteiler oder ein Tauchrohr in die alkalische Wasserlösung eingebracht wird. Um die alkalische Wasserlösung, die sich bei der Durchführung des erfindungsgemäßen Verfahrens verbraucht und ersetzt werden muss, möglichst effektiv nutzen zu können, wird hierbei eine homogene Blasenverteilung angestrebt.

Zur Aufrechterhaltung eines zeitlich konstanten Temperaturgefälles zwischen dem abzukühlenden Gasgemisch und der alkalischen Wasserlösung, sieht eine weitere Ausgestaltung des erfindungsgemäßen Verfahrens vor, dass die alkalische Wasserlösung in indirektem Wärmetausch durch ein Wärmeträgermedium gekühlt wird. Vorzugsweise wird das Wärmeträgermedium in einem geschlossenen Kreislauf geführt, wobei es die aus der alkalischen Wasserlösung aufgenommene Wärme über ein Kühlaggregat wieder abgibt. Insbesondere dann, wenn als Wärmeträgermedium Wasser eingesetzt wird, ist auch ein offener Kühlkreislauf vorstellbar, dem ständig frisches Kaltwasser zugeführt wird.

In einer Variante des erfindungsgemäßen Verfahrens wird das sauere, Wasser und Kohlenmonoxid enthaltende Gasgemisch durch eine begrenzte Menge alkalischer Wasserlösung hindurchgeleitet. Der pH-Wert der Wasserlösung bleibt hierbei nicht konstant, sondern sinkt mit fortschreitender Zeit ab. Bevor sich ein pH-Wert von sieben einstellt, bei dem gebildete Säure nicht mehr neutralisiert werden kann, wird der Strom des Gasgemisches unterbrochen und die verbrauchte gegen frische alkalische Wasserlösung ausgetauscht. Um eine kontinuierliche Behandlung des saueren, Wasser und Kohlenmonoxid enthaltenden Gasgemisches zu gewährleisten wird vorgeschlagen, dass zumindest zwei begrenzte Mengen alkalischer Wasserlösung bereitgestellt werden, so dass das zu behandelnden Gasgemisch stets in eine ausreichend alkalische Wasserlösung umgeleitet werden kann, sobald die aktuell durchströmte alkalische Wasserlösung verbraucht ist. Sinnvollerweise werden die pH-Werte der alkalischen Wasserlösungen kontinuierlich gemessen und überwacht.

Eine andere Variante des erfindungsgemäßen Verfahrens sieht vor, verbrauchte alkalische Wasserlösung kontinuierlich abzuleiten und durch frische alkalische Wasserlösung zu ersetzen. Vorzugsweise wird hierzu eine Regeleinrichtung eingesetzt, die dafür sorgt, dass der pH-Wert der alkalischen Wasserlösung auf einen vorgegebene Wert gehalten wird.

Weiterhin betrifft die Erfindung eine Vorrichtung zur Produktion von Kohlenmonoxid, in der durch Zersetzung von Ameisensäure ein saueres, Wasser und Kohlenmonoxid enthaltendes Gasgemisch erzeugbar ist, aufweisend einen Kondensator, in dem durch Auskondensieren von Wasser aus dem saueren, Wasser und Kohlenmonoxid enthaltenden Gasgemisch ein zweiphasiges Stoffgemisch mit einer Kohlenmonoxid enthaltenden Gas- und einer saueren Flüssigphase erzeugbar ist, sowie eine Trenneinrichtung zum Abtrennen von Kohlenmonoxid aus der Gasphase und zum Neutralisieren der Flüssigphase des im Kondensator erzeugten zweiphasigen Stoffgemisches.

Die gestellte Aufgabe wird vorrichtungsseitig erfindungsgemäß dadurch gelöst, dass Kondensator und Trenneinrichtung als bauliche Einheit (Trenneinheit) ausgeführt sind, wobei die Trenneinheit eine alkalische Wasserlösung umfasst und das sauere, Wasser und Kohlenmonoxid enthaltenden Gasgemisch in die Trenneinheit einleitbar ist und in direktem Kontakt mit der alkalischen Wasserlösung soweit abgekühlt werden kann, dass Wasser auskondensiert.

Bei der Auskondensierung des Wassers entstehende Säure gelangt unmittelbar in die alkalische Wasserlösung, wo sie neutralisiert wird. Die Wände der Trenneinheit sowie evtl. vorhandener Einbauten kommen somit nicht mit Säure in Berührung, weshalb sie aus einem Material gefertigt sein können, dass keine oder nur geringe Säurebeständigkeit aufweist.

Eine bevorzugte Ausgestaltung der erfindungsgemäßen Vorrichtung sieht vor, dass die Trenneinheit wenigstens eine Kolonne umfasst, in der eine alkalische Wasserlösung angeordnet ist und in die das sauere, Wasser und Kohlenmonoxid enthaltende Gasgemisch in Form von Blasen eingebracht werden kann.

Die erfindungsgemäße Vorrichtung weiterbildend wird vorgeschlagen, dass die Kolonne mit einem Gasverteiler oder einem Tauchrohr ausgeführt ist, über den oder das das sauere, Wasser und Kohlenmonoxid enthaltende Gasgemisch in die alkalische Wasserlösung in Form von Blasen eingebracht werden kann. Weiterhin sieht die Erfindung vor, das die Kolonne eine Sprüheinrichtung umfasst, über die alkalische Wasserlösung in das zu behandelnde Gasgemisch in Form feiner Tröpfchen eingesprüht werden kann.

Um zu verhindern, dass sich die alkalische Wasserlösung durch die bei der Abkühlung des saueren, Wasser und Kohlendioxid enthaltenden Gasgemisches aufgenommene Wärmemenge aufheizt und die Wärmeübertragung zwischen den beiden Medien verschlechtert wird, sieht eine weitere Ausgestaltung der erfindungsgemäßen Vorrichtung einen Wärmetauscher vor, der in der Trenneinheit angeordnet ist, über den die alkalische Wasserlösung durch indirekten Wärmetausch mit einem Wärmeträgermedium kühlbar ist. Der Wärmetauscher ist als Teil eines offenen oder eines geschlossenen Kühlkreislaufs ausgeführt, wobei im zweiten Fall das Wärmeträgermedium über ein Kühlaggregat, rückgekühlt werden kann.

Eine weitere Ausgestaltung des erfindungsgemäßen Verfahrens sieht eine Trenneinheit mit wenigstens zwei eine alkalische Wasserlösung enthaltenden Kolonnen vor, wobei das sauere, Wasser und Kohlenmonoxid enthaltende Gasgemisch durch eine oder parallel durch mehrere Kolonnen geführt werden kann. Diese Konfiguration ermöglicht es, die gesamte Menge des zu behandelnden Gasgemisches solange durch eine Kolonne zu leiten, bis die in dem Behälter befindliche alkalische Wasserlösung einen vorgegebenen pH-Wert unterschreitet und damit verbraucht ist. Anschließend kann das Gasgemisch auf eine oder mehrere andere Kolonnen umgeleitet werden, in denen sich alkalische Wasserlösung mit einen ausreichend hohen pH-Wert befindet. Solange eine Kolonne nicht durchströmt wird, kann sinnvollerweise verbrauchte gegen frische alkalische Wasserlösung ausgetauscht werden. Vorzugsweise ist jede Kolonne mit einer Einrichtung ausgestattet, über die der pH-Wert der in der Kolonne befindlichen alkalischen Wasserlösung gemessen und überwacht werden kann.

Eine weitere Ausgestaltung des erfindungsgemäßen Verfahrens sieht vor, das die Trenneinrichtung mit einer eine alkalische Wasserlösung enthaltenden Kolonne ausgeführt ist, durch die das sauere, Wasser und Kohlenmonoxid enthaltende Gasgemisch kontinuierlich geleitet werden kann, wobei die Kolonne mit einer Zuführeinrichtung zur Zuführung von frischer alkalischer Wasserlösung in die Kolonne und mit einer Abzugseinrichtung zum Abziehen von verbrauchter alkalischer Wasserlösung aus der Kolonne ausgeführt ist. Zweckmäßigerweise ist die Trenneinrichtung mit einer Regeleinrichtung ausgestattet, über die der pH-Wert der alkalischen Wasserlösung auf einen vorgegeben Wert geregelt werden kann.

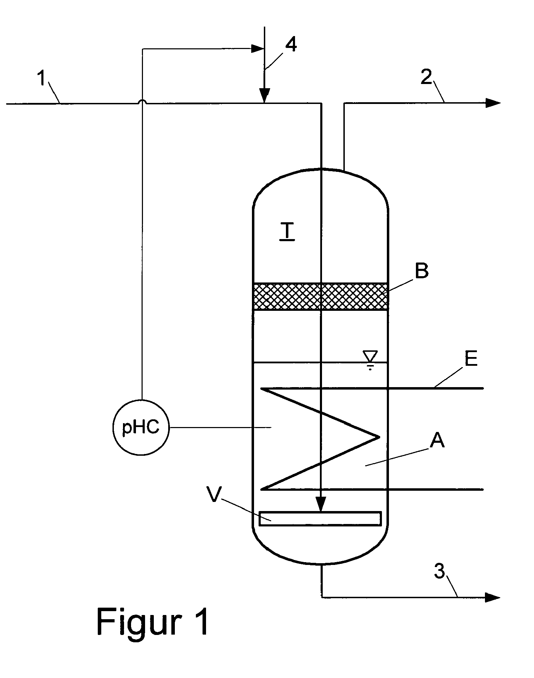

Im Folgenden soll die Erfindung anhand eines in der Figur 1 schematisch dargestellten Ausführungsbeispiels näher erläutert werden.

In dem Ausführungsbeispiel ist der Teil einer Anlage zur Kohlenmonoxidproduktion dargestellt, in dem ein durch Zersetzung von Ameisensäure erzeugtes saueres, Wasser und Kohlenmonoxid enthaltendes Gasgemisch abgekühlt und neutralisiert wird.

Aus einem Reaktor (nicht dargestellt), in dem Ameisensäure mit katalytischer Unterstützung in Wasser und Kohlenmonoxid zerlegt wird, wird über Leitung 1 ein saueres, Wasser und Kohlenmonoxid enthaltendes Gasgemisch mit einer Temperatur von ca. 170°C in die als Kolonne ausgeführte Trenneinheit T eingeleitet und mit Hilfe der Gasverteilerplatte V weitgehend gleichmäßig auf deren Querschnitt verteilt. Die Trenneinheit T enthält eine alkalische Wasserlösung A, in die das sauere, Wasser und Kohlenmonoxid enthaltende Gasgemisch in Blasenform austritt. Aufgrund der sich hierbei ausbildenden großen Grenzfläche, über die sowohl Stoffe als auch Wärme zwischen Gas und Flüssigkeit effektiv ausgetauscht werden können, wird das Gasgemisch rasch abgekühlt, wobei Wasser auskondensiert. Sauere Bestandteile des Gasgemisches gehen entweder direkt oder gemeinsam mit dem kondensierten Wasser in die alkalische Wasserlösung A über, wo sie neutralisiert werden. In der Gasphase bleibt weitgehend nur Kohlenmonoxid zurück, das nach oben steigt. Der Tropfenabscheider B sorgt dafür, dass durch das aufsteigende Kohlendioxid mitgerissene Flüssigkeit zurückgehalten wird, wodurch über Leitung 2 ein Kohlenmonoxidprodukt mit hoher Reinheit abgegeben werden kann. Über Leitung 3 wird ein leicht alkalisches Abwasser aus der Trenneinheit T abgezogen und, nach vollständiger Neutralisation (nicht dargestellt), einer Entsorgung zugeführt. Zur Kühlung der alkalischen Wasserlösung A ist die Trenneinheit T mit einem Wärmetauscher E ausgerüstet, durch den ein Wärmeträgermedium, wie beispielsweise Wasser, zirkuliert. Der pH-Wert der alkalischen Wasserlösung A wird mit Hilfe der Regeleinrichtung pHC konstant gehalten, wozu Lauge in geeigneter Menge über Leitung 4 dem Gasgemisch 1 zudosiert und gemeinsam mit diesem in die Trenneinrichtung T eingebracht wird.

## Patentansprüche

1. Verfahren zur Produktion von Kohlenmonoxid (2), bei dem durch Zersetzung von Ameisensäure ein saueres, Wasser und Kohlenmonoxid enthaltendes Gasgemisch (1) erzeugt wird, aus dem nachfolgend Wasser auskondensiert und dabei entstehende Säure neutralisiert wird, **dadurch gekennzeichnet, dass** das sauere, Wasser und Kohlenmonoxid enthaltenden Gasgemisch (1) in direktem Kontakt mit einer alkalischen Wasserlösung (A) gebracht und **dadurch** soweit abgekühlt wird, dass Wasser auskondensiert.

2. Verfahren nach Anspruch 1, **dadurch gekennzeichnet, dass** das saure, Wasser und Kohlenmonoxid enthaltende Gasgemisch (1) über einen Gasverteiler (V) oder ein Tauchrohr in die alkalische Wasserlösung (A) eingebracht wird.

3. Verfahren nach einem der Ansprüche 1 oder 2, **dadurch gekennzeichnet, dass** die alkalische Wasserlösung (A) in indirektem Wärmetausch mit einem Wärmeträgermedium (E) gekühlt wird.

4. Verfahren nach einem der Ansprüche 1 bis 3, **dadurch gekennzeichnet, dass** verbrauchte (3) kontinuierlich durch frische alkalische Wasserlösung (4) ersetzt wird.

5. Verfahren nach einem der Ansprüche 1 bis 4, **dadurch gekennzeichnet, dass** der pH-Wert der alkalischen Wasserlösung über eine Regeleinrichtung (pHC) auf einen vorgegebenen Wert geregelt wird.

6. Vorrichtung zur Produktion von Kohlenmonoxid (1) in der durch Zersetzung von Ameisensäure ein saueres, Wasser und Kohlenmonoxid enthaltendes Gasgemisch (1) erzeugbar ist, aufweisend einen Kondensator, in dem durch Auskondensieren von Wasser aus dem saueren, Wasser und Kohlenmonoxid enthaltenden Gasgemisch (1) ein zweiphasiges Stoffgemisch mit einer Kohlenmonoxid enthaltenden Gas- und einer saueren Flüssigphase erzeugbar ist, sowie eine Trenneinrichtung zum Abtrennen von Kohlenmonoxid aus der Gasphase und zum Neutralisieren der Flüssigphase des im Kondensator erzeugten zweiphasigen Stoffgemisches, **dadurch gekennzeichnet, dass** Kondensator und Trenneinrichtung als bauliche Einheit (Trenneinheit) (T) ausgeführt sind, wobei die Trenneinheit (T) eine alkalische Wasserlösung (A) umfasst und das sauere, Wasser und Kohlenmonoxid enthaltenden Gasgemisch (1) in die Trenneinheit (T) einleitbar ist und in direktem Kontakt mit der alkalischen Wasserlösung (A) soweit abgekühlt werden kann, dass Wasser auskondensiert.

7. Vorrichtung nach Anspruch 6, **dadurch gekennzeichnet, dass** die Trenneinheit (T) wenigstens eine Kolonne umfasst, in der eine alkalische Wasserlösung angeordnet ist und in die das sauere, Wasser und Kohlenmonoxid enthaltende Gasgemisch (1) in Form von Blasen eingebracht werden kann.

8. Vorrichtung nach Anspruch 7, **dadurch gekennzeichnet, dass** die Kolonne mit einem Gasverteiler (V) oder einem Tauchrohr ausgeführt ist, über den oder das das sauere, Wasser und Kohlenmonoxid enthaltendes Gasgemisch (1) in die alkalische Wasserlösung (A) in Form von Blasen eingebracht werden kann.

9. Vorrichtung nach einem der Ansprüche 6 bis 8, **dadurch gekennzeichnet, dass** in der Trenneinheit (T) ein Wärmetauscher (E) angeordnet ist, über den die alkalische Wasserlösung (A) durch indirekten Wärmetausch mit einem Wärmeträgermedium kühlbar ist.

10. Vorrichtung nach einem der Ansprüche 6 bis 9, **dadurch gekennzeichnet, dass** sie eine Einrichtung (pHC) zur Regelung des pH-Wertes in der alkalischen Wasserlösung (A) umfasst.
